# EUROPEAN PATENT APPLICATION

(11) **EP 4 614 457 A1**
(43) Date of publication of application: **10.09.2025**
(21) Application number: 25157878.7
(22) Date of filing: 14.02.2025
(51) Int. Cl.: G06V 10/778

(54) **DATA PRESENTATION METHOD, ANNOTATION METHOD, AND COMPUTER PROGRAM**

(30) Priority: 05.03.2024 JP 2024033204
(71) Applicant: SCREEN Holdings Co., Ltd., Kyoto-shi, Kyoto 602-8585 (JP)
(72) Inventor: OKAYAMA, Toshiyuki, Kyoto-shi, Kyoto, 602-8585 (JP); NOGUCHI, Takeshi, Kyoto-shi, Kyoto, 602-8585 (JP); HORIDE, Kenta, Kyoto-shi, Kyoto, 602-8585 (JP); MIYAWAKI, Miwa, Kyoto-shi, Kyoto, 602-8585 (JP); SHIMADA, Yoshinori, Kyoto-shi, Kyoto, 602-8585 (JP); CHATANI, Sota, Kyoto-shi, Kyoto, 602-8585 (JP); HAMADA, Yasuhiro, Kyoto-shi, Kyoto, 602-8585 (JP)
(74) Representative: Goddar, Heinz J.

(57) **Abstract**

In this data presentation method, first, feature values of multiple pieces of data 9 are calculated. Subsequently, a distance d between the pieces of data 9 in a feature value space S defined on the basis of the feature values is calculated. Then, the data 9 is selected from a dataset 90 on the basis of the calculated distance d, and is presented to a user. Thus, the data 9 can be presented to the user in the manner corresponding to the distance d between the pieces of data 9 in the feature value space S. Therefore, the user can efficiently perform a process of labelling each of the multiple pieces of data 9.

## Description

### BACKGROUND OF THE INVENTION

### Field of the Invention

The present invention relates to a technology in which a computer presents data to a user in order to assign a label for machine learning to each of multiple pieces of data included in a dataset.

### Description of the Background Art

For supervised machine learning such as deep learning, many pieces of training data are required. For example, in creating a learned model for image recognition, it is required to prepare many pieces of image data as training data. In order to prepare training data, a user assigns a label indicating a correct recognition result to each of many pieces of image data. Such a process of labelling each piece of data is referred to as "annotation".

A conventional technology regarding annotation is described in, for example, Japanese Patent Application Laid-Open No. 2023-52502.

Annotation is a process of labelling many pieces of data one by one, and thus poses a heavy burden on a user. In order to lighten the workload of a user for annotation, domain information of data is used, as conventionally known. Specifically, multiple pieces of data are rearranged according to a date and time of shooting, a location of shooting, a format of an image, and the like that are included in domain information. In a case in which domain information and images are correlated with each other, the above-described method can reduce the cognitive burden on a user.

However, in a case in which domain information and images are not correlated with each other, the burden on a user cannot be reduced by the above-described method. Further, in dealing with data in which domain information itself is missing, the above-described method cannot be applied.

### SUMMARY OF THE INVENTION

In view of this, it is an object of the present invention to provide a technology that makes it possible to efficiently perform a process of labelling multiple pieces of data without depending only on domain information.

To solve the above-described problem, the first invention of the present application is directed to a data presentation method for a computer to present data to a user, to assign a label for machine learning to each of multiple pieces of data included in a dataset, wherein the computer performs a feature extraction step of calculating feature values of the multiple pieces of data, a distance calculation step of calculating a distance between the pieces of data in a feature value space defined on the basis of the feature values, and a presentation step of selecting data from the dataset on the basis of the distance and presenting the data to the user.

The second invention of the present application is directed to the data presentation method according to the first invention, wherein the computer further performs a rearrangement step of changing an order of the multiple pieces of data in accordance with the distance calculated in the distance calculation step, and in the presentation step, the computer presents the data to the user in the order that has been changed in the rearrangement step.

The third invention of the present application is directed to the data presentation method according to the first or second invention, wherein the computer further performs a dimensionality reduction step of reducing dimensionality of the feature values calculated in the feature extraction step, and in the distance calculation step, the computer calculates the distance between the pieces of data in the feature value space defined on the basis of the feature values having been subjected to dimensionality reduction.

The fourth invention of the present application is directed to the data presentation method according to any of the first to third inventions, wherein the dataset includes known data having been labelled, the computer further performs a clustering step of classifying the multiple pieces of data with reference to a position of the known data in the feature value space, and in the presentation step, the computer presents the data to the user on the basis of a result of classification in the clustering step.

The fifth invention of the present application is directed to the data presentation method according to fourth invention, wherein, in the presentation step, the computer presents a result of estimation of a label for the data to the user on the basis of the result of classification in the clustering step.

The sixth invention of the present application is directed to the data presentation method according to the fifth invention, wherein, in the presentation step, the computer requests the user to select whether the result of estimation is correct or incorrect.

The seventh invention of the present application is directed to an annotation method including the data presentation method according to any of the first to sixth inventions, wherein the computer performs a labelling step of assigning a label input by the user to the data after the presentation step.

The eighth invention of the present application is directed to a computer program that causes the computer to perform the data presentation method according to any of the first to sixth inventions.

According to the first to eighth inventions of the present application, data can be presented to the user in the manner corresponding to the distance between the pieces of data in the feature value space. This allows the user to efficiently perform a process of labelling each of the pieces of data.

Especially, according to the third invention of the present application, a computational burden on the computer for calculation of the distance between the pieces of data in the feature value space can be reduced.

Especially, according to the fourth invention of the present application, the multiple pieces of data are automatically classified by the clustering step. This allows the user to more efficiently perform a process of labeling each of the pieces of data.

Especially, according to the fifth invention of the present application, the computer presents the result of estimation of a label, to the user. This allows the user to more efficiently perform a process of labelling each of the pieces of data.

Especially, according to the sixth invention of the present application, the number of options to be selected by the user is reduced to two, which can further lighten the workload of the user.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view showing a configuration of a computer that performs a data presentation method;
Fig. 2 is a flowchart showing a process flow of annotation;
Fig. 3 is a view showing an example of a dataset;
Fig. 4 is a view showing an example of a result of feature extraction;
Fig. 5 is a view showing an example of a result of dimensionality reduction;
Fig. 6 is a view showing an example of a feature value space;
Fig. 7 is a view showing an example of a dataset having been subjected to rearrangement;
Fig. 8 is a view showing an example of a GUI displayed on a display unit;
Fig. 9 is a view showing an example of a GUI according to a first modification;
Fig. 10 is a flowchart showing a process flow of annotation according to a second modification;
Fig. 11 is a view schematically showing a process of clustering;
Fig. 12 is a view showing an example of a GUI displayed on the display unit after clustering; and
Fig. 13 is a view showing another example of a GUI displayed on the display unit after clustering.

### DESCRIPTION OF THE PREFERRED EMBODIMENTS

Hereinafter, a preferred embodiment of the present invention will be described with reference to the drawings.

### <1. Configuration of Computer>

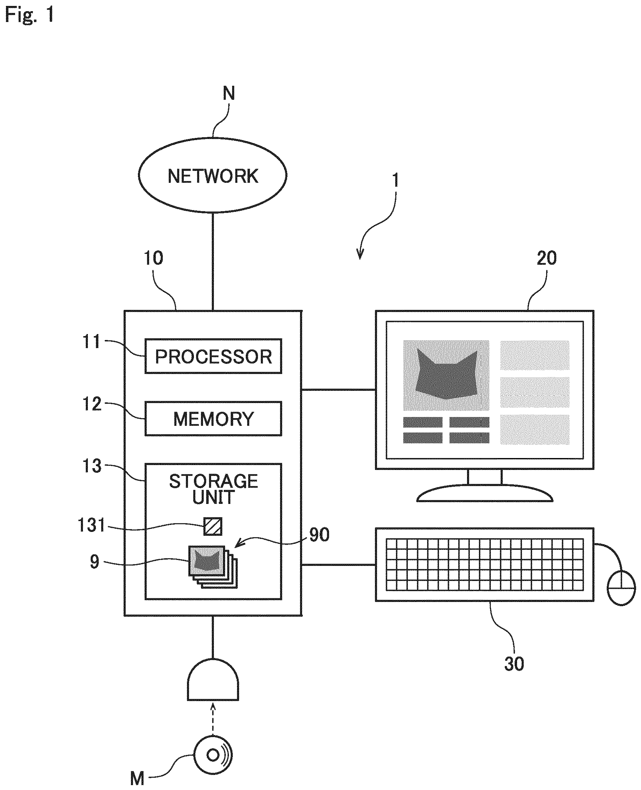

Fig. 1 is a view showing a configuration of a computer 1 that performs a data presentation method according to one preferred embodiment of the present invention. The computer 1 is a system for annotating each of multiple pieces of data 9 in order to make a dataset 90 including the multiple pieces of data 9 usable as training data for supervised machine learning. Annotation is a process of assigning a label that is information to be learned, to each of the multiple pieces of data 9 included in the dataset 90. In the present embodiment, it is assumed that each of the pieces of data 9 of the dataset 90 is image data.

As shown in Fig. 1, the computer 1 includes a computer main body 10, a display unit 20, and an input unit 30.

The computer main body 10 is an information processing device that performs various kinds of processing regarding annotation. The computer main body 10 includes a processor 11 such as a CPU, a memory 12 such as a RAM, and a storage unit 13 such as a hard disk drive.

In the storage unit 13, a computer program 131 is stored. The computer program 131 is application software that causes the computer main body 10 to perform various kinds of processing regarding annotation. The computer program 131 is read out from a storage medium M such as a CD or a DVD and is installed on the computer main body 10. Alternatively, the computer program 131 may be downloaded to the computer main body 10 via a network N such as the Internet.

The display unit 20 is a device configured to display various kinds of information output from the computer main body 10. For the display unit 20, for example, a liquid crystal display is used. The input unit 30 is a device configured to input various kinds of information to the computer main body 10. For the input unit 20, for example, a keyboard or a mouse is used. Note that the display unit 20 and the input unit 30 may be implemented by a single device such a touch panel display. The display unit 20 and the input unit 30 are electrically connected to the computer main body 10.

### <2. Annotation>

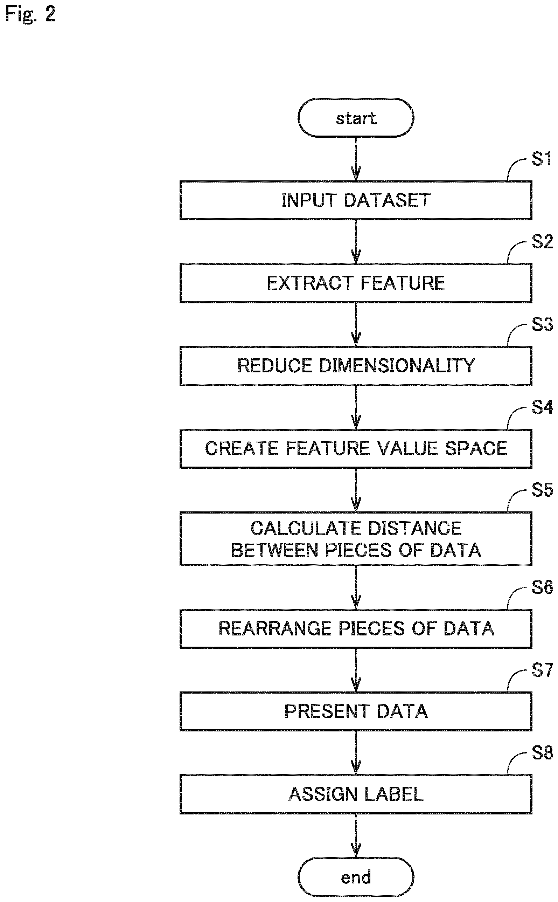

Next, a process of annotation using the above-described computer 1 is described. Fig. 2 is a flowchart showing a process flow of annotation. The computer 1 reads out the computer program 131 stored in the storage unit 13 and loads the computer program 131 into the memory 12. Then, the processor 11 performs computational processing in accordance with the computer program 131, to thereby perform the process in Fig. 2.

In performing annotation, first, the dataset 90 to be annotated is input to the computer 1 (step S1: data input step). The dataset 90 is input to the computer 1 via, for example, the network N, and is stored in the storage unit 13 of the computer 1. Alternatively, the dataset 90 may be one that is created in the computer 1 and stored in the storage unit 13.

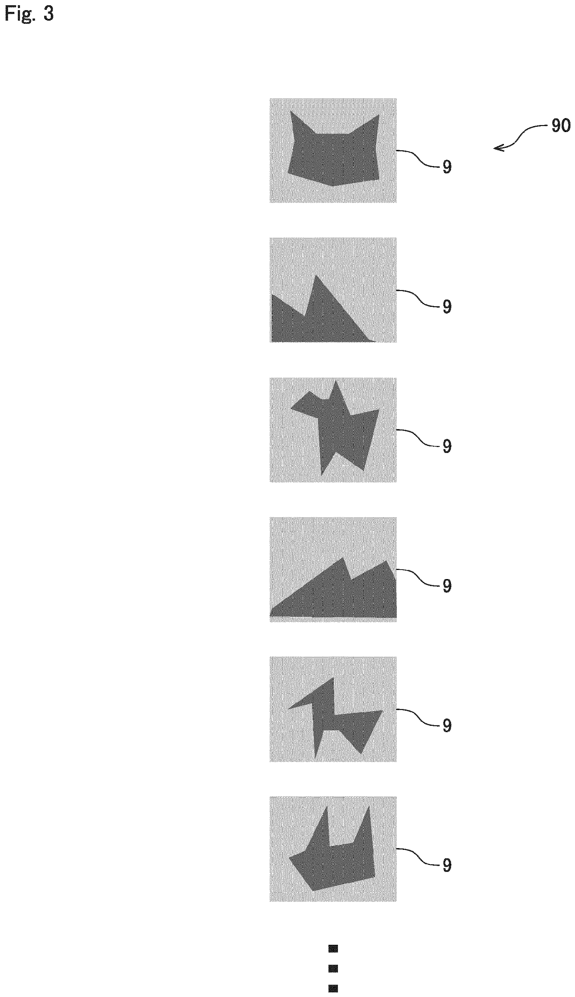

Fig. 3 is a view showing an example of the dataset 90. As shown in Fig. 3, the dataset 90 includes the multiple pieces of data 9. The multiple pieces of data 9 are data of different images, respectively. The dataset 90 includes sorting information indicating an arrangement order of the multiple pieces of data 9. At the time when the step S1 is performed, the multiple pieces of data 9 are arranged in an order independent of similarity between images. The multiple pieces of data 9 may be arranged in an order by date and time of creation thereof or an order by data name, or alternatively, may be arranged in a random order.

The computer 1 reads out the dataset 90 from the storage unit 13. Then, the computer 1 performs feature extraction on the multiple pieces of data 9 of the dataset 90 (step S2: feature extraction step). Specifically, a feature value f of each of the pieces of data 9 is calculated by a neural network algorithm, an autocorrelation algorithm, a geometric feature extraction algorithm, a moment feature extraction algorithm, or an algorithm using pixel values. Note that the algorithm for the feature extraction is not limited to the examples described above. Further, a plurality of algorithms may be combined with each other for use in the feature extraction.

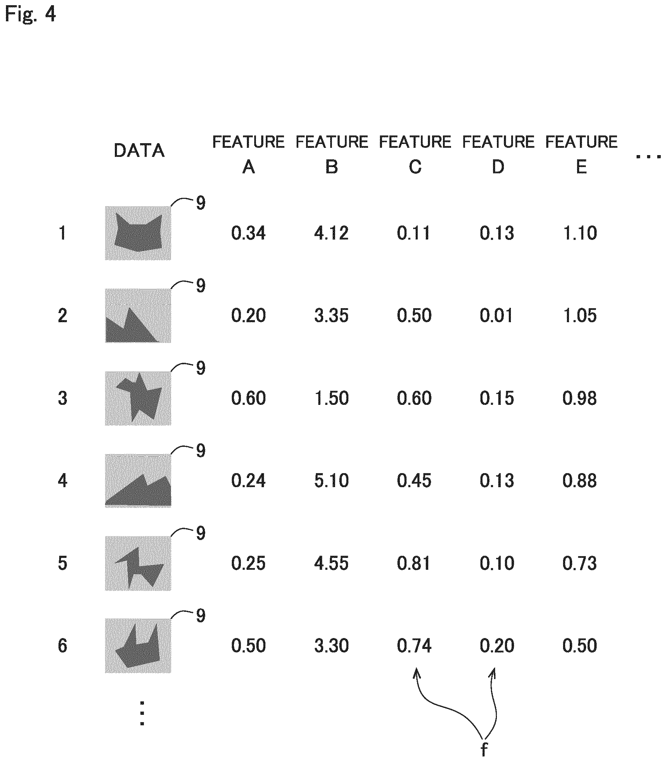

Fig. 4 is a view showing an example of a result of the feature extraction. By the feature extraction, a plurality of feature values f are calculated for each of the pieces of data 9 as shown in Fig. 4. The feature value f is numerical information indicating intensity of a certain feature of the data 9. In the example shown in Fig. 4, the feature values f of a plurality of features A, B, C, and so forth that are different from each other are calculated for one piece of data 9. Hereinafter, the number of the features A, B, C, and so forth will be referred to as a "dimension". The computer 1 calculates the feature value f that is multi-dimensional (for example, 100-dimensional), for each of the pieces of data 9.

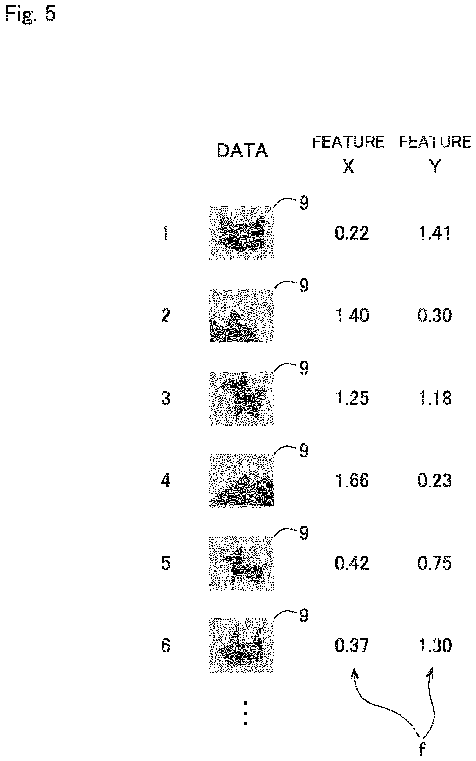

Subsequently, the computer 1 reduces the dimensionality of the feature value f (step S3: dimensionality reduction step). Fig. 5 is a view showing an example of a result of the dimensionality reduction. In this example, the many features A, B, C, and so forth shown in Fig. 4 are reduced to two features X and Y shown in Fig. 5. The two features X and Y may be two features selected from the many features A, B, C, and so forth in Fig. 4, or may be features that reflect some features included in the many features A, B, C, and so forth.

It is preferred that the features X and Y after the dimensionality reduction have the feature values f that are widely distributed so that the multiple pieces of data 9 do not densely gather in a feature value space S described later. Specifically, it is preferred that the mean of distribution of the feature values f of the features X and Y after the dimensionality reduction be larger than that of the features A, B, C, and so forth before the dimensionality reduction.

In the example in Fig. 5, the dimensionality of the feature value f is reduced to two dimensions. Note that the dimensionality after the dimensionality reduction is not limited to two dimensions, but may be one dimension, three dimensions, four dimensions, or the like. That is, the dimensionality after the dimensionality reduction is only required to be smaller than that before the dimensionality reduction. The dimensionality reduction lightens a computational burden on the computer 1 for processes in the next step S4 and thereafter.

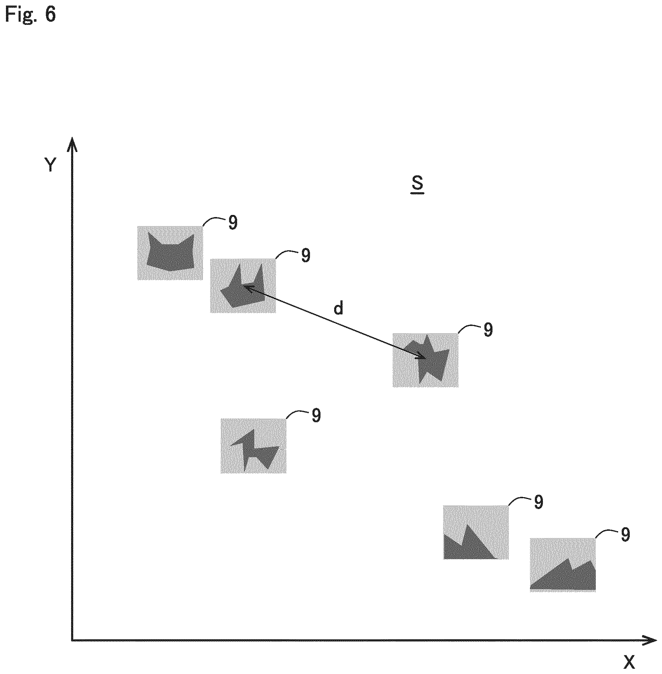

Then, the computer 1 creates the feature value space S on the basis of the features X and Y after the dimensionality reduction (step S4: feature-value-space creation step). Fig. 6 is a view showing an example of the feature value space S. In the example in Fig. 6, a two-dimensional feature value space S is defined on the basis of the features X and Y. Thus, in the example in Fig. 6, an X axis of the feature value space S represents the feature value f of the feature X, and a Y axis of the feature value space S represents the feature value f of the feature Y.

The feature value space S is created in accordance with the dimensionality of the feature value f after the dimensionality reduction. Thus, as the feature value f after the dimensionality reduction is three-dimensional, four-dimensional, and so forth, the feature value space S is accordingly a three-dimensional space, a four-dimensional space, and so forth. Meanwhile, in a case in which the feature value f after the dimensionality reduction is one-dimensional, the feature value space S is accordingly a one-dimensional space (number line).

As shown in Fig. 6, the computer 1 performs mapping of each of the pieces of data 9 in the feature value space S. For example, the first one of the pieces of data 9 in Fig. 5 is mapped at coordinates (X = 0.22, Y = 1.41) in the feature value space S. The computer 1 performs mapping of all the pieces of data 9 of the dataset 90 in the feature value space S in accordance with the feature values f thereof.

Subsequently, the computer 1 calculates a distance d between two pieces of the data 9 in the feature value space S (step S5: distance calculation step). The distance d is a Euclidean distance (linear distance) between two pieces of the data 9 in the feature value space S. The closer the feature values f of two pieces of the data 9, in other words, the more similar two pieces of the data 9, the smaller the distance d. Thus, the distance d can be treated as a numerical value indicating similarity between two pieces of the data 9. The computer 1 calculates the distance d described above for all pairs of the pieces of data 9 included in the dataset 90.

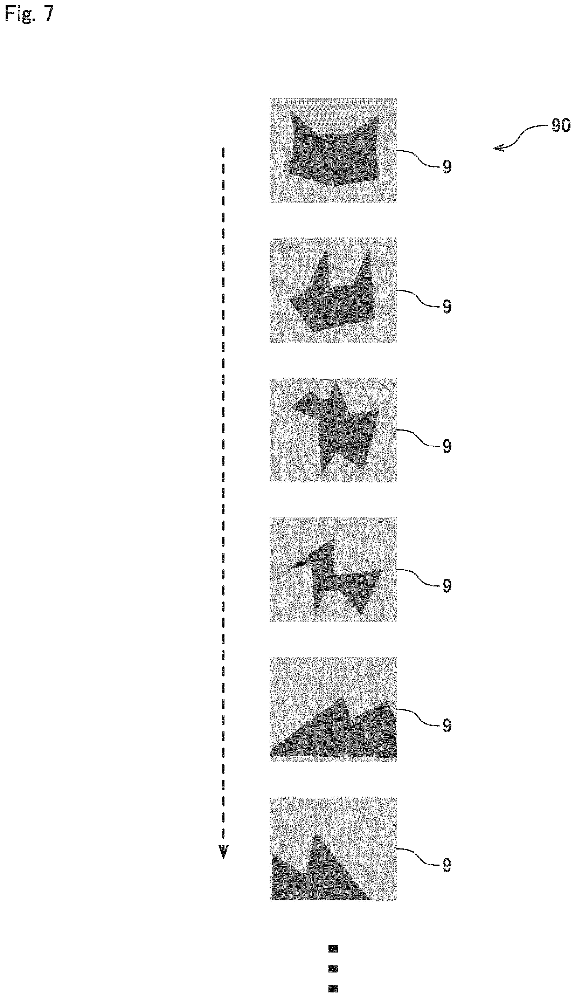

Then, the computer 1 changes an arrangement order of the pieces of data 9 in the dataset 90 in accordance with the calculated distances d (step S6: rearrangement step). Fig. 7 is a view showing an example of the dataset 90 having been subjected to rearrangement. As shown in Fig. 7, the arrangement order of the multiple pieces of data 9 of the dataset 90 is changed such that two pieces of the data 9 whose distance d in the feature value space S is small are placed close to each other whereas two pieces of the data 9 whose distance d in the feature value space S is large are placed far from each other. The computer 1 writes the changed arrangement order into the sorting information of the dataset 90.

After that, the computer 1 presents each of the pieces of data 9 of the dataset 90 to a user who performs a process of annotation (step S7: presentation step). Specifically, the computer 1 displays each of the pieces of data 9 of the dataset 90 on the display unit 20. The user operates the input unit 30 while visually checking the data 9 displayed on the display unit 20, to label each of the pieces of data 9.

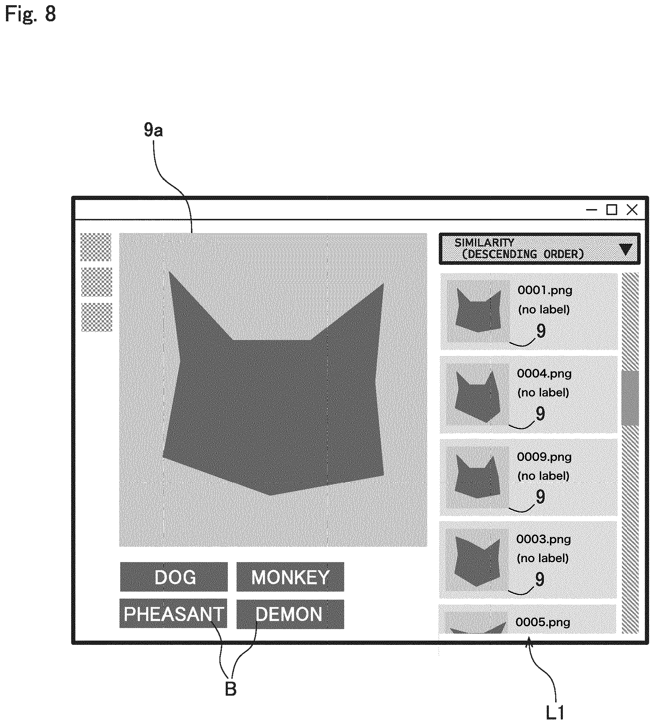

Fig. 8 is a view showing an example of a graphical user interface (GUI) displayed on the display unit 20. In the example in Fig. 8, a piece of the data 9 being noticed as an object of labelling (hereinafter referred to as "active data 9a") is displayed larger than the other pieces of the data 9. Further, buttons B for candidate labels are displayed near the active data 9a (on the lower side of the active data 9a in the example in Fig. 8). In the example in Fig. 8, the buttons B for four labels of "DOG", "MONKEY", "PHEASANT", and "DEMON" are arranged.

Further, in the GUI in Fig 8, a waiting data list L1 is displayed near the active data 9a. In the waiting data list L1, the multiple pieces of data 9 except the active data 9a are displayed in an array as smaller images than the active data 9a. An arrangement order of the multiple pieces of data 9 in the waiting data list L1 is an order that has been changed in the rearrangement step described above. More specifically, the multiple pieces of data 9 in the waiting data list L1 are arranged in an ascending order of the distance d from the active data 9a in the feature value space S.

The user operates the input unit 30, to select any one of the four buttons B, and inputs a label. As a result, the computer 1 assigns the label input by the user, to the active data 9a (step S8: labelling step).

When labelling of one piece of the active data 9a is completed, a piece of the data 9 at the top of the waiting data list L1 is displayed large as next active data 9a. That is, a piece of the data 9 whose distance d from the previous active data 9a in the feature value space S is small is displayed as new active data 9a. Then, the user performs a process of labelling the new active data 9a.

Thus, the computer 1 selects the pieces of data 9 and presents them to the user in an order of the distance d between the pieces of data 9 in the feature value space S. In this manner, the pieces of data 9 whose distances d in the feature value space S are small can be successively presented to the user. Hence, the user can successively assign the same label such as "DOG", "DOG", "DOG", ..., for example, to the multiple pieces of data 9. This can lighten the workload of the user for labelling.

As described above, in the present embodiment, the computer 1 presents the data 9 to the user in the manner corresponding to the distance d between the pieces of data 9 in the feature value space S. This allows the user to efficiently perform a process of labelling the data 9.

### <3. Modifications>

Hereinabove, the preferred embodiment of the present invention has been described, but the present invention is not limited to the above-described preferred embodiment. Below, description is given about various modifications, focusing on differences from the above-described preferred embodiment.

### <3-1. First Modification>

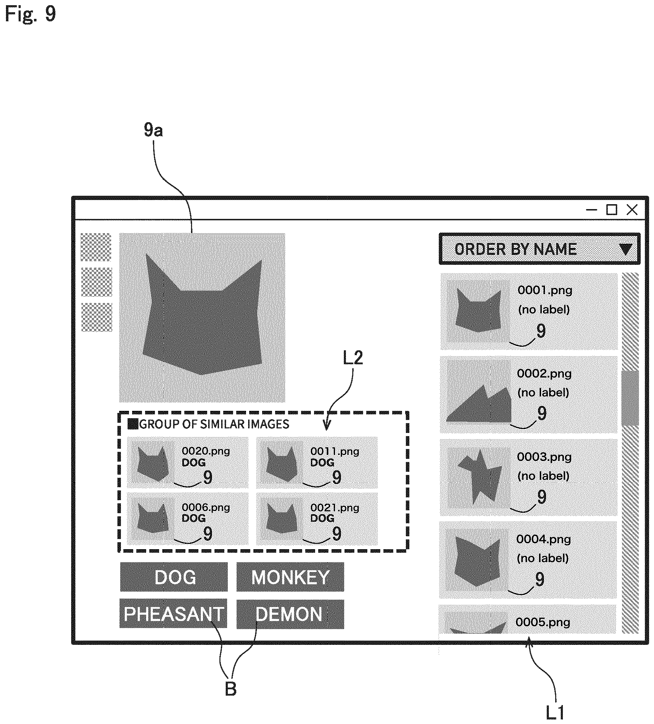

Fig. 9 is a view showing an example of a GUI according to a first modification. In the GUI in Fig. 9, the multiple pieces of data 9 are arranged in an order by name in the waiting data list L1. Then, aside from the waiting data list L1, a reference data list L2 that should be referred to in labelling is displayed near the active data 9a (on the lower side of the active data 9a in the example in Fig. 9). The computer 1 selectively displays labeled data whose distance d from the active data 9a in the feature value space S is small, among the pieces of data 9, in the reference data list L2.

In this manner, the user can recognize what label has been assigned to the data 9 similar to the active data 9a by referring to the reference data list L2. Hence, the user can select a label of the active data 9a with reference to the label assigned to the data 9 in the reference data list L2. This can further reduce the workload of the user for labelling.

### <3-2. Second Modification>

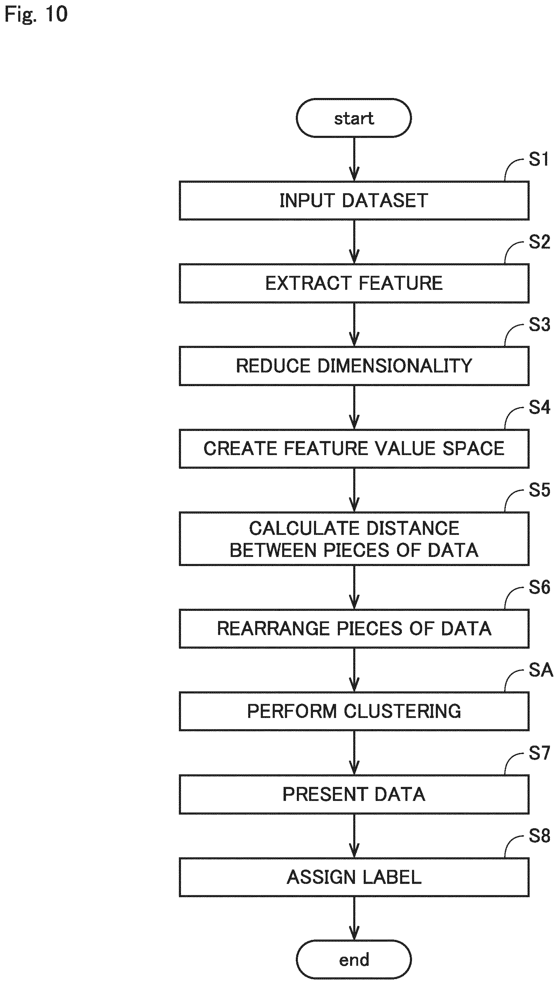

Fig. 10 is a flowchart showing a process flow of annotation according to a second modification. The process shown in Fig. 10 is different from the process shown in Fig. 2 in inclusion of a step of performing clustering of the multiple pieces of data 9 according to the feature values f (step SA: clustering step). The clustering is performed after the feature value space S is created in the step S4 and before the data 9 is presented in the step S7.

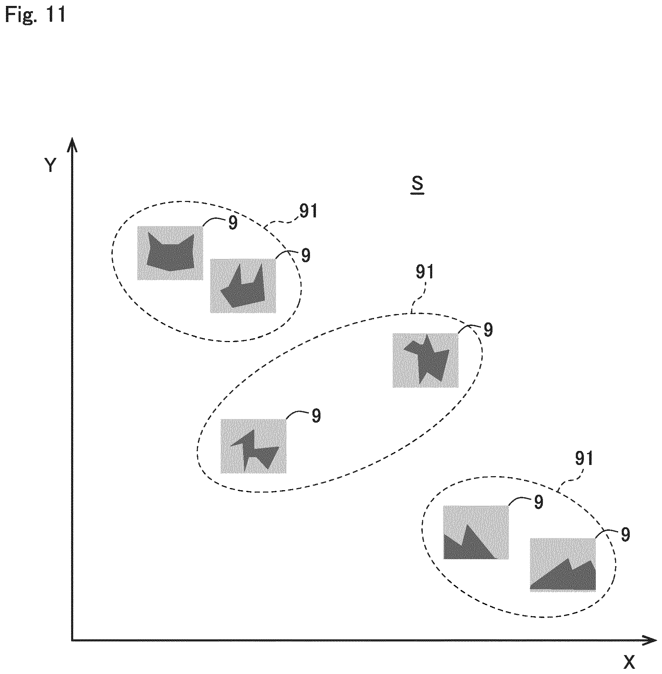

Fig. 11 is a view schematically showing a process of clustering. As shown in Fig. 11, the computer 1 classifies the multiple pieces of data 9 into two or more clusters 91 according to a position of each of the pieces of data 9 and the distance d between the pieces of data 9 in the feature value space S. Specifically, the computer 1 classifies the pieces of data 9 whose distances d from each other are small, into the same cluster 91.

Meanwhile, in a case in which the multiple pieces of data 9 of the dataset 90 include a piece of data 9 having been labelled (hereinafter referred to as "known data 9b"), the computer 1 may classify the multiple pieces of data 9 with reference to a position of the known data 9b. For example, the computer 1 may classify the multiple pieces of data 9 present within a predetermined distance d centered on the known data 9b in the feature value space S, into one cluster 91. In such a case, the computer 1 estimates that the data 9 belonging to the cluster 91 centered on the known data 9b is highly likely to be the data 9 to which the same label as that of the known data 9b should be assigned.

Further, in a case in which the dataset 90 includes multiple pieces of known data 9b to which different labels are assigned, the computer 1 may estimate ranges of the clusters 91 corresponding to the different labels, respectively, in the feature value space S. Such clustering can be performed by a non-parametric estimation method such as, for example, kernel density estimation, a parametric estimation method, or the like.

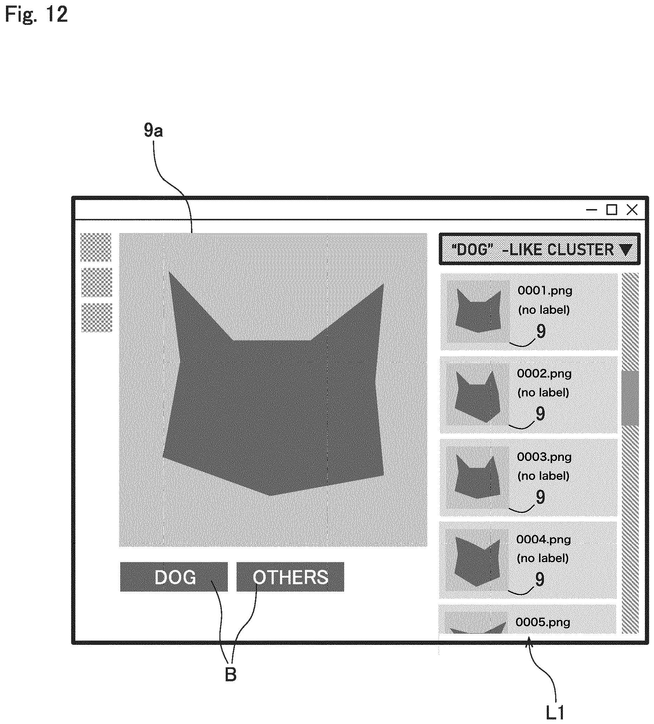

Fig. 12 is a view showing an example of the GUI displayed on the display unit 20 after the above-described clustering is performed. In this example, only the pieces of data 9 classified into the cluster 91 corresponding to the "DOG" label are displayed in a section of the active data 9a and the waiting data list L1. Thus, all the pieces of data 9 displayed in the GUI in Fig. 12 have each a "DOG"-like feature.

In this case, the computer 1 displays only two buttons B for "DOG" and "OTHERS" on the lower side of the active data 9a as shown in Fig. 12. That is, the computer 1 requests the user to select whether a result of estimation by the clustering ("DOG", as the result of estimation in this case) is correct or incorrect. In this manner, the user is not required to select a label from many options, but is only required to make a selection from two options of "DOG" and "OTHERS". This can further lighten the workload of the user for labelling.

### <3-3. Third Modification>

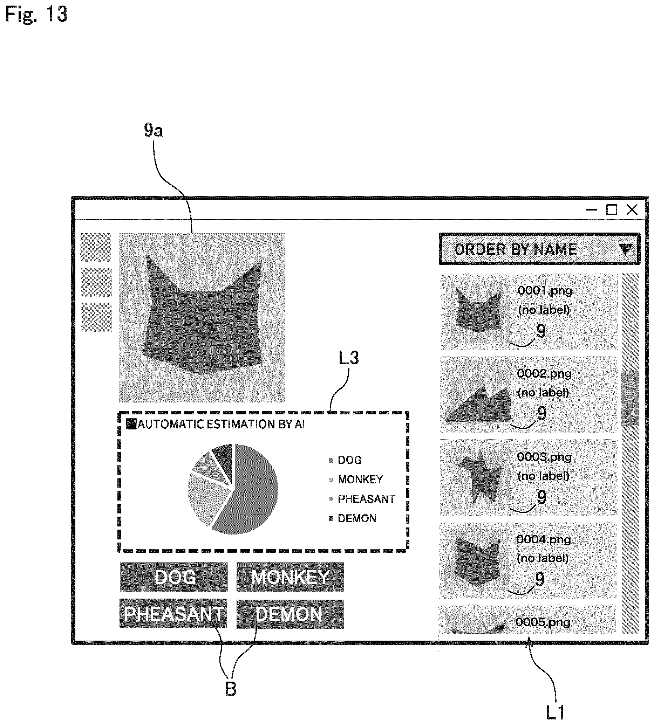

Fig. 13 is a view showing another example of the GUI displayed on the display unit 20 after clustering similar to the clustering in the second modification is performed. In this example, a label estimation result L3 for the active data 9a based on the clustering is displayed near the active data 9a (on the lower side of the active data 9a in the example in Fig. 13).

The label estimation result L3 is created on the basis of, for example, a label of the known data 9b belonging to the same cluster 91 as the active data 9a and a label of the known data 9b belonging to a neighboring cluster 91. In the label estimation result L3, a prediction probability of each label for the active data 9a is displayed. In the example shown in Fig. 13, the label estimation result L3 is displayed in the form of a pie chart. Alternatively, the label estimation result L3 may be in the form of a histogram, a list, or the like. Further alternatively, only one label with the highest prediction probability may be displayed as the label estimation result L3.

In this manner, the computer 1 can propose a label to the user via the label estimation result L3. Thus, the user can easily select a label of the active data 9a on the basis of the label estimation result L3. This can further reduce the workload of the user for labelling.

### <3-4. Other Modifications>

In the above-described waiting data list L1 shown in Fig. 8, the pieces of data 9 are arranged in an ascending order of the distance d from the active data 9a in the feature value space S. Alternatively, for example, in a case in which the user wants to search for a piece of the data 9 that is an outlier, the pieces of data 9 may be arranged in a descending order of the distance d from the active data 9a in the feature value space S, in the waiting data list L1. Further, the GUI may be designed such that an arrangement order of the pieces of data 9 in the waiting data list L1 can be selected from a plurality of options such as a "descending order of similarity between images", a "descending order of dissimilarity between images", and an "order by name".

Further, in the above-described preferred embodiment, the dimensionality reduction of the step S3 is performed after the feature extraction of the step S2. Alternatively, in a case in which there are sufficient computational resources of the computer 1, the dimensionality reduction of the step S3 may be omitted. In such a case, the feature value space S may be created in the step S4 by using the full-dimensional feature value f extracted in the step S2.

Further, in the above-described preferred embodiment, description has been given about a case in which the multiple pieces of data 9 of the dataset 90 are image data. However, the data 9 is not limited to image data, and may be video data, audio data, and the like.

Moreover, with regard to details of the data presentation method and the annotation method described above, appropriate modifications and partial omissions are possible within a scope not departing from the gist of the present invention. Furthermore, the respective elements described in the above-described preferred embodiment and modifications may be appropriately combined unless contradiction occurs.

While the invention has been shown and described in detail, the foregoing description is in all aspects illustrative and not restrictive. It is therefore understood that numerous modifications and variations can be devised without departing from the scope of the invention.

## Claims

1. A data presentation method for a computer (1) to present data (9) to a user, to assign a label for machine learning to each of multiple pieces of data (9) included in a dataset (90), comprising the steps of:
a) a feature extraction step of calculating feature values of the multiple pieces of data (9);
b) a distance calculation step of calculating a distance between the pieces of data (9) in a feature value space defined on the basis of the feature values; and
c) a presentation step of selecting data (9) from the dataset (90) on the basis of the distance and presenting the data (9) to the user, wherein
the steps a) to c) are performed by the computer (1).

2. The data presentation method according to claim 1, further comprising the step of
d) a rearrangement step of changing an order of the multiple pieces of data (9) in accordance with the distance calculated in the step b), wherein
the step d) is performed by the computer (1), and
in the step c), the computer (1) presents the data (9) to the user in the order that has been changed in the step d).

3. The data presentation method according to claim 1 or claim 2, further comprising the step of
e) a dimensionality reduction step of reducing dimensionality of the feature values calculated in the step a), wherein
the step e) is performed by the computer (1), and
in the step b), the computer (1) calculates the distance between the pieces of data (9) in the feature value space defined on the basis of the feature values having been subjected to dimensionality reduction.

4. The data presentation method according to any one of claims 1 to 3, further comprising the step of
f) a clustering step of classifying the multiple pieces of data (9), wherein
the step f) is performed by the computer (1),
the dataset (90) includes known data (9b) having been labelled,
in the step f), the computer (1) classifies the multiple pieces of data (9) with reference to a position of the known data (9b) in the feature value space, and
in the step c), the computer (1) presents the data (9) to the user on the basis of a result of classification in the step f).

5. The data presentation method according to claim 4, wherein, in the step c), the computer (1) presents a result of estimation of a label for the data (9) to the user on the basis of the result of classification in the step f).

6. The data presentation method according to claim 5, wherein, in the step c), the computer (1) requests the user to select whether the result of estimation is correct or incorrect.

7. An annotation method including the data presentation method according to any one of claims 1 to 6, further comprising the step of
g) a labelling step of assigning a label input by the user to the data (9) after the step c), wherein
the step g) is performed by the computer (1).

8. A computer program that causes the computer (1) to perform the data presentation method according to any one of claims 1 to 7.
